Europäisches Patentamt

European Patent Office

Office européen des brevets

(19)

(11) Veröffentlichungsnummer: **0 351 546 B1**

## EUROPÄISCHE PATENTSCHRIFT

(12)

(45) Veröffentlichungstag der Patentschrift: **04.11.92**

(51) Int. Cl.5: **F24J 2/50**, F24J 2/40, F24J 2/04

(21) Anmeldenummer: **89110737.7**

(22) Anmeldetag: **14.06.89**

(54) **Solarkollektor zur Erzeugung hoher Temperaturen.**

(30) Priorität: **21.07.88 DE 3824759**

(43) Veröffentlichungstag der Anmeldung:
**24.01.90 Patentblatt 90/04**

(45) Bekanntmachung des Hinweises auf die
Patenterteilung:
**04.11.92 Patentblatt 92/45**

(84) Benannte Vertragsstaaten:
**AT BE CH DE ES FR GB GR IT LI NL SE**

(56) Entgegenhaltungen:
**EP-A- 0 079 976**
**WO-A-81/01188**
**DE-A- 2 835 371**

**PATENT ABSTRACTS OF JAPAN, Band 7, Nr.
157 (M-227)[1302], 9. Juli 1983; & JP-A-58 64
450**

(73) Patentinhaber: **FRAUNHOFER-GESELLSCHAFT
ZUR FÖRDERUNG DER ANGEWANDTEN FOR-
SCHUNG E.V.
Leonrodstrasse 54
W-8000 München 19(DE)**

(72) Erfinder: **Pflüger, Antonio, Dr.
Petersbergstrasse 8
W-5300 Bonn 2(DE)**

(74) Vertreter: **Rackette, Karl, Dipl.-Phys. Dr.-Ing
Kaiser-Joseph-Strasse 179 Postfach 1310
W-7800 Freiburg(DE)**

EP 0 351 546 B1

## Beschreibung

Die Erfindung betrifft einen Solarkollektor zur Erzeugung hoher Temperaturen mit einer Gehäusewanne, einer den Solarkollektor abdichtenden Glasplatte, einem selektiven Absorber, und mit einer an der Innenseite der Glasplatte dichtend befestigten transparenten Dämmstruktur, wobei zwischen der transparenten Dämmstruktur und dem selektiven Absorber ein Luftspalt vorhanden ist.

Solche Solarkollektoren werden zur Energiegewinnung, insbesondere von Wärmeenergie für die Erwärmung von Flüssigkeiten, eingesetzt. Dabei fällt das einfallende Sonnenlicht auf einen schwarzen Absorber, der die einfallende Lichtenergie zu ungefähr 95 Prozent in Wärme umwandelt. Ein Fluid, das den schwarzen Absorber durchströmt, transportiert die Wärmeenergie an einen Ort, an dem sie gespeichert oder genutzt wird.

Der schwarze Absorber ist auf der von dem einfallenden Sonnenlicht abgewandten Seite thermisch gut isoliert. Auf der Seite des Solarkollektors, die der Sonne zugewandt ist, ist die Isolation gegen Wärmeverluste schwieriger zu realisieren. In den meisten Flachkollektoren treten Verluste durch Konvektion der im Solarkollektor befindlichen Luft sowie Infrarot-Abstrahlung des heißen Absorbers auf.

Ein Solarkollektor der eingangs genannten Art zur Erzeugung hoher Temperaturen ist aus der EP-A-0 079 976 bekannt, der bei großen Temperaturdifferenzen zwischen dem Absorber einerseits und dem Bereich außerhalb des Solarkollektors andererseits betrieben wird. Die bei diesem bekannten Kollektor entstehenden Wärmeverluste werden durch einen zusätzlichen Luftspalt zwischen dem selektiven Absorber und der dort eingesetzten Wabenstruktur gesenkt. Dies verringert das Beschädigungsrisiko der Dämmschicht durch hohe Temperaturen. Die Breite des Luftspaltes und damit der Reduzierung der Wärmeverluste sind jedoch Grenzen gesetzt: Abhängig von der Temperatur setzt bei einer Spaltbreite von wenigen Zentimetern Luftkonvektion ein.

Einen Ausweg aus der eventuellen Zerstörbarkeit der Dämmschicht oder den hohen Verlusten bieten Hochvakuum-Solarkollektoren an, die aus Applied Solar Energy von A.B. und M.P. Meinel ( Addison-Wesley, 1977 ) bekannt sind. Hier ist der selektive Absorber in einen hochevakuierten Glastubus eingeschmolzen. Durch den evakuierten Zwischenraum zwischen dem Absorber und dem Abdeckglas wird jegliche Luftkonvektion und Wärmeleitung durch die Luft vermieden und damit der Wirkungsgrad erhöht. Es sind bei oben angesprochenen Temperaturdifferenzen von über 100° Celsius Wirkungsgrade von 50 bis 60 Prozent erreichbar. Nachteilig wirkt sich der Einsatz eines Hochvakuums aus, da hierbei die Güte des Vakuums über die gesamte Betriebszeit gehalten werden muß. Damit sind Hochvakuum-Solarkollektoren im Betrieb sehr teuer und schwierig zu handhaben.

Eine weitere Lösungsmöglichkeit ist aus dem Firmenkatalog der thermo-solar Energietechnik GmbH 6/87 bekannt. Hier wird der Hohlraum zwischen der äußeren Glasplatte und dem selektiven Absorber schwach evakuiert, um die Luftkonvektion im Solarkollektor zu vermindern. Damit wurden zwar schon hohe Wirkungsgrade erzielt, jedoch fällt der Wirkungsgrad gerade bei großen Temperaturdifferenzen zwischen dem Bereich außerhalb des Solarkollektors und dem Absorber weiterhin stark ab.

In dem Artikel "Minimum thermal conductivity of transparent insulation materials" von A. Pflüger aus Solar Energy Materials 16, S. 255-265 (1987) wird die Wärmeleitfähigkeit bei für Lichtstrahlung transparenten Wärmedämmaterialien theoretisch untersucht.

In der DE-OS 28 35 371 sowie in der DE-OS 28 35 372 wird jeweils ein Sonnenheizgerät beschrieben, bei dem an der abdeckenden Glasplatte Wärmedämmaterialien befestigt sind, die wabenförmig oder aus Röhrchen ausgebildet sind. Durch die transparente Wärmedämmung an der Innenseite der Glasplatte wird die Luftkonvektion und die Wärmestrahlung unterdrückt.

Aus der DE-OS 28 23 449 ist ein weiteres Sonnenheizgerät zur Aufheizung von Gasen bekannt, bei dem die oben erwähnte Wabenstruktur lichtdurchlässig oder totalreflektierend ausgebildet ist.

Die DE-OS 27 40 448 beschreibt die Verwendung von Schaumglas als Dämmstoff- und Konstruktionsmaterial für Solarkollektoren.

Die DE-OS 31 50 251 lehrt einen Strahlungskollektor mit einem evakuiertem Innenraum, dessen Deckplatte mit Hilfe von strahlungsundurchlässigen Stützplatten gegen thermische und Druckbelastungen abgestützt ist.

Aus der WO-A-8 101 188 wird ebenfalls die Möglichkeit vorgeschlagen, Dämmaterialen zwischen einer Abdeckplatte und dem selektiven Absorber anzuordnen. In der dortigen speziellen Ausgestaltung betrifft dies selbsttragende transparente Folien, die in gewellter Form gegeneinander verdreht angeordnet werden, wobei horizontale Kanäle entstehen, deren Hauptrichtung also parallel zu der Ebene der Glasplatte bzw. der selektiven Absorber verläuft. Neben der Gefahr der Beschädigung dieser Materialien durch eine Aufwärmung der absorbernahen Folie weist der Kollektor nach dieser Druckschrift den Nachteil auf, daß der Wärmerückhalt aufgrund der volltransparenten Folie relativ gering ist.

Ausgehend von diesem Stand der Technik liegt der Erfindung die Aufgabe zugrunde, einen Solarkollektor der eingangs genannten Art zu schaffen, der einen hohen Wirkungsgrad bei großen Temperaturdifferenzen zwischen dem Absorber einerseits und dem Bereich außerhalb des Solarkollektors andererseits aufweist.

Diese Aufgabe wird erfindungsgemäß dadurch gelöst, daß der Solarkollektor einen Druck von unter 10000 Pa in seinem Hohlraum aufweist und daß die transparente Dämmstruktur eine Strahlungslänge aufweist, die kleiner als 5 Zentimeter ist.

Dadurch, daß ein leichter Unterdruck vorgesehen ist, kann die Konvektion innerhalb des Hohlraums wirksam reduziert werden. Wenn zugleich die transparente Dämmstruktur eine Strahlungslänge von weniger als 5 Zentimeter aufweist, wird neben der Konvektion auch die Wärmeleitung wirkungsvoll unterdrückt. Durch die Verbindung beider Merkmale ist ein Luftspalt in der Größenordnung von 10 Zentimetern und größer wählbar, so daß die Dämmstruktur, selbst bei einem leichten Verbiegen der Abdeckplatte durch äußere Einflüsse nicht gefährdet ist, wobei trotzdem das Auftreten von Konvektion vermieden wird.

Bei einer bevorzugten Ausführungsform weist der Luftspalt eine Breite auf, die der Strahlungslänge der transparenten Dämmstruktur multipliziert mit dem um die Zahl $\frac{1}{2}$ verminderten Reziprokwert des Emissionsgrads des selektiven Absorbers entspricht, wobei ein vorteilhaftes Gesamtergebnis der Energieverluste erreichbar ist.

Bei der Verwendung einer Dämmstruktur mit in der Längsrichtung gestreckten Waben bilden diese mit ihren Seitenwänden enge Kanäle mit einem geschlossenen Ende, so daß keine Luftkonvektion auftreten kann.

Durch ein großes Verhältnis zwischen der Länge der Waben und deren Durchmesser wird die Luftkonvektion stark unterdrückt, da ein Wabenende an der äußeren Glasplatte dichtend befestigt ist.

Die Verwendung von in einer Ebene quer zur Glasplatte verlaufenden Tragringen zur Stützung der abdeckenden Glasplatte gegenüber dem Vakuum gestattet die Reduzierung der Zahl der die Glasplatte abstützenden Stützen. Dadurch kann die Wärmeableitung über die Stützen stark vermindert werden. Es besteht auch die Möglichkeit, den Absorber und die Stützen so auszubilden, daß sie sich gegenseitig nicht berühren.

Ein Betriebsunterdruck von 2000 bis 5000 Pa gestattet die Verwendung von einfachen Kolbenpumpen zur Evakuierung des Solarkollektors. Bei den angegebenen Gasdrücken zeichnet sich mikroporöser Wärmedämmstoff durch eine extrem niedrige Wärmeleitfähigkeit aus.

Da die Wärmeleitfähigkeit mit dem Luftdruck ansteigt, kann die Regelung des Luftdrucks innerhalb des Solarkollektors zur Temperaturregelung verwendet werden.

Nachfolgend werden drei Ausführungsbeispiele der Erfindung anhand der Zeichnung näher erläutert. Es zeigen:

Fig. 1 einen Querschnitt durch einen Solarkollektor gemäß einem ersten Ausführungsbeispiel der Erfindung,

Fig. 2 eine perspektivische Draufsicht auf einen Solarkollektor gemäß dem ersten Ausführungsbeispiel der Erfindung ohne seine wärmedämmende, transparente Abdeckung des Solarkollektors und

Fig. 3 einen Querschnitt durch einen Solarkollektor gemäß einem zweiten Ausführungsbeispiel der Erfindung.

Fig. 4 einen Querschnitt durch einen Solarkollektor gemäß einem dritten Ausführungsbeispiel der Erfindung.

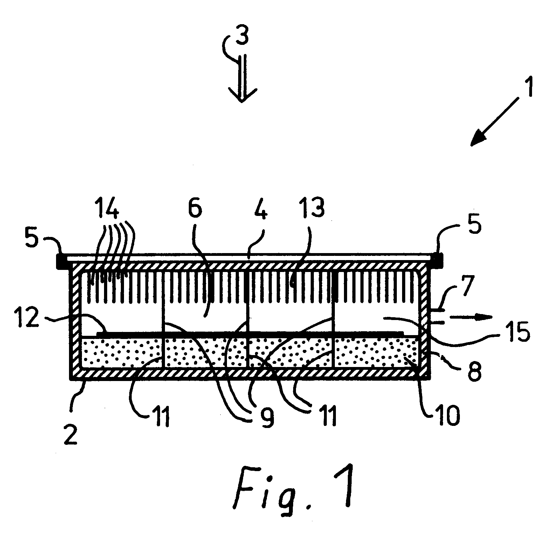

Die Fig. 1. zeigt einen Solarkollektor 1 nach einem ersten Ausführungsbeispiel der Erfindung in einem Querschnitt. Der Solarkollektor 1 weist eine vorzugsweise nahtlos gezogene Gehäusewanne 2 auf, deren Länge und Breite groß zu ihrer Höhe ist. Sie kann z.B. aus Stahl oder einem anderen für die Atmosphäre am Einsatzort des Solarkollektors 1 vorgesehenen Werkstoff bestehen. Die Gehäusewanne 2 ist im wesentlichen nach oben offen, so daß das gerichtet einfallende Sonnenlicht 3 durch die obere Öffnung ungehindert eintreten kann.

Die dem einfallenden Sonnenlicht 3 zugewandte, offene Seite des Solarkollektors 1 ist mit einer Glasplatte 4 abgedeckt und an den Übergangsstellen 5 der Glasplatte 4 zu der Gehäusewanne 2 mit dieser verklebt. Für den Randverbund von der Glasplatte 4 und der Gehäusewanne 2 können auch andere Dichtverfahren verwendet werden, z.B. Glas-Metall-Übergänge. Die Glasplatte 4 besteht aus möglichst eisenarmen Glas, um die Absorptionsverluste des einfallenden Sonnenlichtes 3 in der Glasplatte 4 klein zu halten, und kann aus Sicherheitsgründen vorgespannt sein.

Durch Abdichtung der dem einfallenden Sonnenlicht 3 zugewandten, offenen Seite der Gehäusewanne 2 mit der Glasplatte 4 entsteht ein Hohlraum 6.

An einer Längsseite des Solarkollektors 1 ist ein Vakuumanschluß 7 in die Gehäusewanne 2 eingelassen, der über einen Vakuumschlauch mit einer in der Fig. 1 nicht dargestellten Vakuumpumpe verbunden ist. Die Vakuumpumpe evakuiert den durch die Gehäusewanne 2 einerseits und durch die Glasplatte 4 andererseits vorgegebenen Hohlraum 6 auf einen Druck von etwa 2000 bis 5000 Pa. Diesen Betriebsdruck kann eine einfache Kolbenpumpe herstellen und aufrechterhalten.

Ein Betriebsdruck von 2000 bis 5000 Pa bedeutet eine Belastung für die Gehäusestruktur des Solarkollektors 1, insbesondere für die Glasplatte 4. Zur Verminderung der Belastung des von außen auf die Konstruktion einwirkenden Luftdrucks sind Tragringe 8 vorgesehen, von denen einer im Querschnitt der Fig. 1 dargestellt ist. Durch die Verwendung von Tragringen 8 kann die Anzahl der zusätzlich einzusetzenden Vakuumstützen 9 sehr reduziert werden, wodurch der durch Wärmeleitung in den Stützelementen eintretende Wärmeverlust stark verringert wird.

Der Boden der Gehäusewanne 2 ist mit einem mikroporösen Wärmedämmstoff 10 ausgelegt, der Wärmeverluste in Richtung der von dem einfallenden Sonnenlicht 3 abgewandten Seite des Solarkollektors 1 vermindert.

Mikroporösität heißt hier, daß die Poren einen wesentlich kleineren Durchmesser besitzen, als die mittlere freie Weglänge der Luftmoleküle bei dem oben angegebenen Luftdruck. Die mittlere freie Weglänge der Luftmoleküle bei diesem Unterdruck liegt im Mikrometerbereich. Die Wärmedämmwirkung wird dadurch erheblich verbessert. Die Dicke der mikroporösen Wärmedämmstoffschicht 10 ist so gewählt, daß die Isolation des Solarkollektors 1 in Richtung der von dem einfallenden Sonnenlicht 3 abgewandten Seite wesentlich besser als die Isolation auf der der Sonne zugewandten Seite ist. Manche mikroporösen Wärmedämmstoffe 10 können den Vakuumdruck aufnehmen, so daß auf die in Fig. 1 gezeichneten Abschnitte 11 der Vakuumstützen 9 verzichtet werden kann, welches sich vorteilhaft auf die Wärmeleitverluste durch die Rahmenkonstruktion des Solarkollektors 1 auswirkt.

Auf dem mikroporösen Wärmedämmstoff 10 ist ein selektiver Absorber 12 angeordnet, der das einfallende Sonnenlicht 3 in Wärme umwandelt. Das zum Wärmetransport notwendige Fluid, das Fluidkanäle am oder im Absorber 12 durchströmt, ist einschließlich seiner Zu- und Ableitungen aus dem Solarkollektor 1 zur Übersichtlichkeit nicht eingezeichnet. Der selektive Absorber 12 weist eine Beschichtung auf, die für das Spektrum des einfallenden Sonnenlichtes 3 schwarz ist, d.h. das gesamte einfallende Sonnenlicht 3 wird von dem selektiven Absorber 12 absorbiert. Für den Wellenlängenbereich der thermischen Abstrahlung des selektiven Absorbers 12 wirkt die Beschichtung dagegen nahezu spiegelnd und ist damit abstrahlungsarm.

An der zum Absorber 12 weisenden Seite der Glasplatte 4 ist in dem Hohlraum 6 des Solarkollektors 1 eine transparente Wabenstruktur 13 als Wärmedämmstoff angebracht. Sie besteht aus transparenten Kanälen oder Waben 14, deren Durchmesser im Verhältnis zur Länge der Waben 14 klein ist. Das mit der Glasplatte 4 in Kontakt befindliche Ende der Wabenstruktur 13 ist dichtend mit dieser verbunden. Dadurch ist das eine Ende der Waben 14 verschlossen.

Die Wandstrukturen dieser Waben 14 sind transparent ausgebildet und vorteilhafterweise aus Polygonen z.B. Quadraten, Hexagonen oder Oktogonen und Quadraten, aufgebaut. Die drei genannten Wandstrukturen gestatten im Querschnitt parallel zu den Stirnflächen der Wabenstruktur 13 die vollständige Belegung der Querschnittsfläche der Wabenstruktur 14 mit den genannten Polygonen. Insbesondere die ersten beiden Wandstrukturen weisen vorteilhafterweise noch gleichgroße Querschnittsflächen der Waben 14 auf.

Die Länge der Wabenstruktur 13 beträgt im beschriebenen ersten Ausführungsbeispiel zehn Zentimeter, der Durchmesser einer einzelnen Wabe 14 ist so klein gewählt, daß eine Luftkonvektion innerhalb einer Wabe 14 bei dem herrschenden Unterdruck im Solarkollektor 1 im Wesentlichen unterdrückt ist. Wesentlich für einen hohen Wirkungsgrad ist, daß die relative Rohdichte unter 10 Prozent und die thermische Strahlungslänge unter 5 Zentimeter liegt; vorzugsweise unter 2 Zentimetern. Letztere entspricht einer optischen Dichte von etwa $0,5$ cm$^{-1}$ und größer.

Zwischen der Unterseite der Wabenstruktur 13 und dem selektiven Absorber 12 ist hier ein zehn Zentimeter breiter, sich parallel zum Absorber 12 erstreckender Luftspalt 15 im Hohlraum 6 vorgesehen. Da im Solarkollektor 1 ein schwaches Vakuum von etwa 2000 bis 5000 Pascal herrscht, tritt trotz der Einbringung des Luftspaltes 15 in den Hohlraum 6 keine Luftkonvektion auf. Der Luftspalt weist eine Breite im Bereich von 5 bis 20 Zentimeter auf. Zusätzlich erwärmt sich bei Kollektortemperaturen von 200° Celsius die transparente Wabenstruktur 13 dann nur auf maximal 120° Celsius, d.h auf eine Temperatur, die die aus Kunststoff bestehende transparente Wabenstruktur 13 nicht gefährdet.

Die angegebenen Werte für die Dicke des Luftspaltes 15 und der transparenten Wabenstruktur 13, die die Höhe der Gehäusewanne 2 bestimmen, sind für Betriebstemperaturen von 200° Celsius im Bereich des selektiven Absorbers 12 ausgelegt.

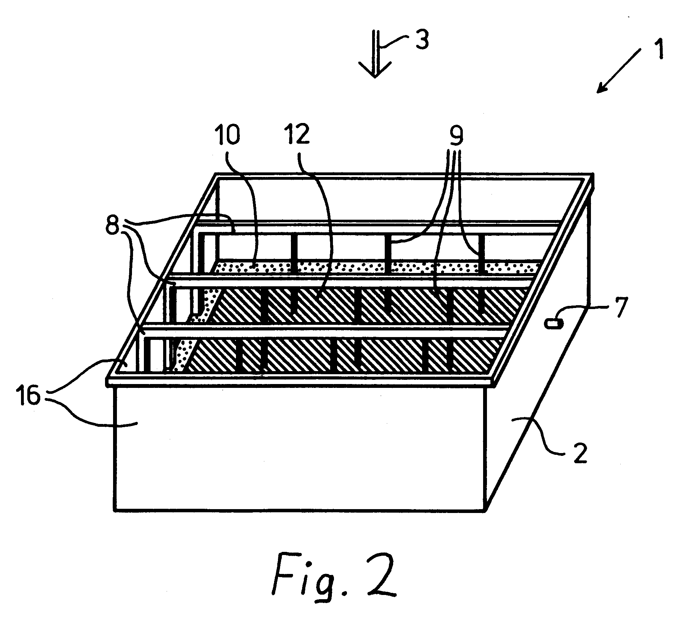

Die Fig. 2 zeigt einen Solarkollektor 1 nach einem ersten Ausführungsbeispiel der Erfindung in einer perspektivischen Draufsicht, ohne seine Glasplatte 4 und ohne die transparente Wabenstruktur 13, um die Gehäuse- und Rahmenstruktur zu verdeutlichen. Der dargestellte Solarkollektor 1 weist drei Tragringe 8 auf, deren Innenraum jeweils von drei Vakuumstützen 9 unterstützt wird. Die geringstmögliche Anzahl der zu verwendenden Tragringe 8 und Vakuumstützen 9 im Hohlraum 6 für eine hohe Stabilität des Solarkollektors 1 bei dem im Betrieb herrschenden Unterdruck variiert mit der Größe des Unterdrucks und mit den Fertigungsausmaßen des Solarkollektors 1.

Der Solarkollektor 1 ist mit dem mikroporösen Wärmedämmstoff 10 ausgelegt und dieser fast ganz mit dem selektiven Absorber 12 bedeckt. Gerade mikroporöse Wärmedämmstoffe 10 weisen bei den angegebenen Gasdrücken im Solarkollektor 1 eine extrem niedrige Wärmeleitfähigkeit auf, es können aber auch andere Materialien als mikroporöser Wärmedämmstoff 10 zur Wärmedämmung des Solarkollektors 1 verwendet werden, insbesondere eine Kombination von die Wärmestrahlung reflektierenden Schichten und Wärmedämmmaterialien.

Die bei der von dem einfallenden Sonnenlicht 3 abgewandten Seite verwendeten Materialien können zusätzlich auch zur seitlichen Wärmedämmung an den Seitenwänden 16 des Solarkollektors 1 angeordnet werden, um den Wärmeverlust auch durch die Seitenwände 16 hindurch weiter zu verringern.

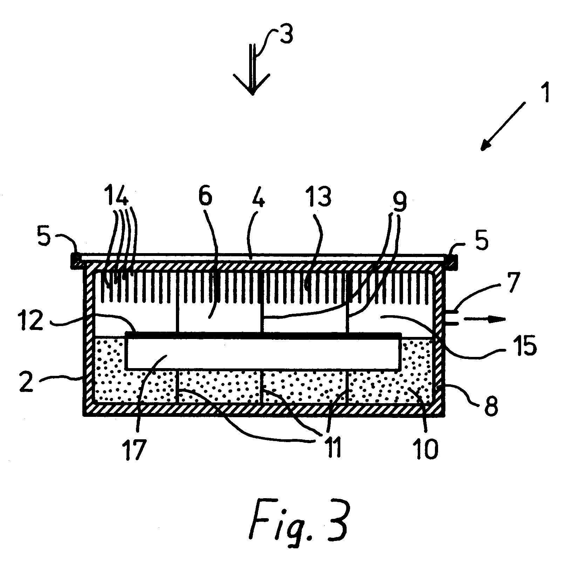

Die Fig. 3 zeigt ein zweites Ausführungsbeispiel der Erfindung als integrierten Speicher-Solarkollektor 1. Wie im ersten Ausführungsbeispiel bildet die Gehäusewanne 2 und die Glasplatte 4 den Hohlraum 6, der die Wabenstruktur 13, den mikroporösen Wärmedämmstoff 10, Tragringe 8, Vakuumstützen 9, den Vakuumanschluß und den selektiven Absorber 12 aufweist. Anstelle der im ersten Ausführungsbeispiel vorhandenen Fluidkanäle im oder am selektiven Absorber 12 ist im zweiten Ausführungsbeispiel ein Fluidbehälter 17 unterhalb des selektiven Absorbers 12 angeordnet. Leitungen zu dem Fluidbehälter 17 im Solarkollektor 1 sind zur Übersichtlichkeit nicht eingezeichnet.

Der Fluidbehälter 17, der auch ganz oder zum Teil in den selektiven Absorber 12 integriert sein kann, weist ein großes Volumen auf. Das sich in diesem Volumen befindliche Fluid dient gleichzeitig als Wärmetauscher und als Wärmereservoir, was sich aufgrund der guten Wärmedämmung des Solarkollektors 1 vorteilhaft auf die Wärmeverluste des Solarenergiesystems im Ganzen in Zeiten fehlender Sonneneinstrahlung auswirkt.

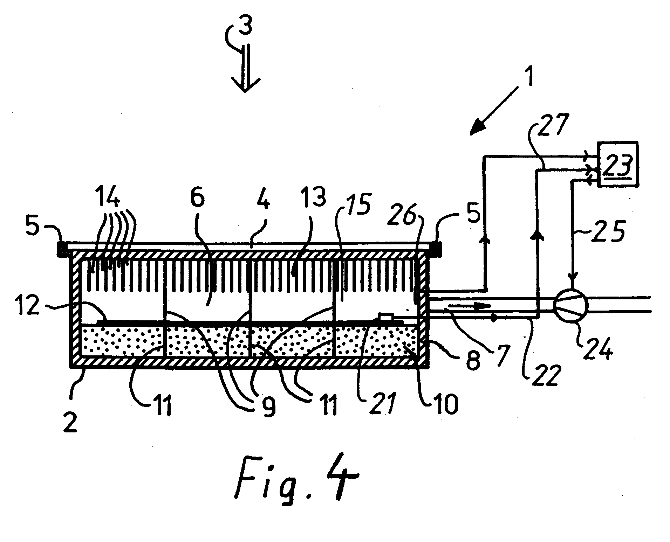

Die Fig. 4 zeigt einen Querschnitt durch einen Solarkollektor 1 gemäß einem dritten Ausführungsbeispiel der Erfindung. An den selektiven Absorber 12 ist ein Temperaturfühler 21 angeschlossen, der die Temperatur der Absorberoberfläche erfaßt. Das resultierende Temperatursignal beaufschlagt über eine Verbindungsleitung 22 eine elektronische Regelschaltung 23.

In einer anderen in der Zeichnung nicht dargestellten Ausführungsform ist der Temperaturfühler 21 an der transparenten Wabenstruktur 13 befestigt oder berührt außerhalb des Solarkollektors 1 eine Fluidleitung des im Absorber 12 erwärmten Fluids. Auch bei diesen Ausführungsformen ist aus der gemessenen Temperatur die Temperatur des Absorbers 12 in der elektronischen Regelschaltung 23 ermittelbar.

An die von der Umgebung dicht abgeschlossene Gehäusewanne 2 ist über den Vakuumanschluß 7 eine Vakuumpumpe 24 angeschlossen, mit deren Hilfe der normale Betriebsunterdruck zwischen ungefähr 1000 und 10000 Pascal erzeugbar ist. Dieser normale Betriebsunterdruck ist die Folge eines Fließgleichgewichtes, das sich aufgrund der Dichtungsverluste der abgeschlossenen Gehäusewanne 2 mit der Umgebung einstellt.

Die elektronische Regelschaltung 23 ist über eine Steuerleitung 25 mit der Vakuumpumpe 24 verbunden. Dadurch ist die Vakuumpumpe 24 mit Steuersignalen beaufschlagbar, die die Pumpleistung der Vakuumpumpe 24 festlegen. Die Pumpleistung ist ein direktes Maß für den in dem Hohlraum 6 vorherrschenden Druck. Vorteilhafterweise ist in dem Hohlraum 6 ein Drucksensor 26 vorgesehen, der über eine Druckmeßleitung 27 mit der elektronischen Regelschaltung 23 verbunden ist. Dann kann mit Hilfe der elektronischen Regelschaltung 23 direkt auf den gewünschten Unterdruck geregelt werden.

Der Unterdruck von wenigen 1000 Pascal verhindert wirkungsvoll die Luftkonvektion innerhalb des Hohlraums 6 für z.B. einen Luftspalt von über 10 bis 20 Zentimeter. Die Wärmedämmung des Absorbers gegenüber den von dem einfallenden Sonnenlicht 3 abgewandten Seiten ist bei der Verwendung des mikroporösen Wärmedämmstoffs 10 hervorragend, da die freie Weglänge der Luftmoleküle, die im Mikrometerbereich liegt, größer als der Porendurchmesser des mikroporösen Wärmedämmstoffs 10 ist.

Die elektronische Regelschaltung 23 regelt die Temperatur und damit den Wirkungsgrad des Solarkollektors 1. Steigt die Temperatur unerwünscht an, so drosselt die elektronische Regelschaltung 23 über die Steuerleitung 25 die Pumpleistung der Vakuumpumpe 24 und erhöht dadurch den Druck in dem Solarkollektor 1. Die Wärmeleitfähigkeit steigt mit dem in dem Solarkollektor 1 vorherrschenden Luftdruck an. Die in dem Hohlraum 6 einsetzende Luftkonvektion erniedrigt die Temperatur des selektiven Absorbers 12, aber erhöht kurzfristig die Temperatur des transparenten Wärmedämmstoffs 13, der durch diese Temperaturerhöhung zerstört werden kann.

Bei der erfindungsgemäßen Auskleidung der vom einfallenden Sonnenlicht 3 abgewandten Seiten des Solarkollektors 1 mit dem mikroporösen Wärmedämmstoff 10 erhöht sich auch in den Poren von diesem der Luftdruck, so daß die freie Weglänge der Luftmoleküle in den Poren unter den Porendurchmesser absinkt, sich dadurch die Wärmeleitfähigkeit des mikroporösen Wärmedämmstoffs 10 stark erhöht und somit die überschüssige Wärme des Absorbers 12 insbesondere auch in Richtung der vom einfallenden Sonnenlicht 3 abgewandten Seiten abgeleitet wird.

Die Breite eines vorteilhaften Luftspaltes A errechnet sich aus A = B • ( $C^{-1}$ - 0,5 ), wobei B die Strahlungslänge der transparenten Dämmstoffe 13 ist, die bei den verwendeten Dämmstoffen ungefähr dem Reziprokwert der optischen Dichte entspricht und wobei C dem Emissionsgrad des selektiven Absorbers 12 entspricht. Als transparente Dämmstoffe 13 werden vorzugsweise Stoffe mit einer Strahlungslänge von kleiner 5 Zentimeter verwendet. Der Emissionsgrad für Wärmestrahlung eines üblichen selektiven Absorbers beträgt ungefähr 0,1.

Die Breite eines vorteilhaften Luftspaltes ergibt sich bei einem transparenten Dämmstoff 13 mit einer Strahlungslänge von 2 Zentimetern, einem üblichen Absorbermaterial und bei einem Unterdruck von 2000 Pascal zu ungefähr 19 Zentimeter.

**Patentansprüche**

1. Solarkollektor zur Erzeugung hoher Temperaturen mit einer Gehäusewanne (2), einer den Solarkollektor (1) abdichtenden Glasplatte (4), einem selektiven Absorber (12), und mit einer an der Innenseite der Glasplatte (4) dichtend befestigten transparenten Dämmstruktur (13), wobei zwischen der transparenten Dämmstruktur (13) und dem selektiven Absorber (12) ein Luftspalt (15) vorhanden ist, **dadurch gekennzeichnet,** daß der Solarkollektor (1) einen Druck von unter 10000 Pa in seinem Hohlraum (6) aufweist und daß die transparente Dämmstruktur (13) eine Strahlungslänge aufweist, die kleiner als 5 Zentimeter ist.

2. Solarkollektor nach Anspruch 1, dadurch gekennzeichnet, daß der Luftspalt (15) eine Breite aufweist, die der Strahlungslänge der transparenten Dämmstruktur (13) multipliziert mit dem um die Zahl ½ verminderten Reziprokwert des Emissionsgrads des selektiven Absorbers (12) entspricht.

3. Solarkollektor nach einem der Ansprüche 1 oder 2, dadurch gekennzeichnet, daß der Luftspalt zwischen 5 und 20 Zentimeter breit ist.

4. Solarkollektor nach einem der vorstehenden Ansprüche, dadurch gekennzeichnet, daß die Dämmstruktur (13) über in der Längsrichtung gestreckte Waben (14) verfügt, deren Länge groß gegen ihren Durchmesser ist.

5. Solarkollektor nach Anspruch 4, dadurch gekennzeichnet, daß die Wandstrukturen der Waben (14) aus in ihrer Fläche gleich großen Polygonen aufgebaut sind, insbesondere aus Quadraten oder Hexagonen.

6. Solarkollektor nach Anspruch 4 oder Anspruch 5, dadurch gekennzeichnet, daß die Dämmstruktur (13) entlang der Stirnfläche der Waben (14) an die Glasplatte (4) angeklebt ist.

7. Solarkollektor nach einem der vorstehenden Ansprüche, dadurch gekennzeichnet, daß Tragringe (8) vorgesehen sind, die die Glasplatte (4) gegen den äußeren Luftdruck abstützen.

8. Solarkollektor nach einem der vorstehenden Ansprüche, dadurch gekennzeichnet, daß der Unterdruck im Innenraum (6) des Solarkollektors (1) einen Druck zwischen 2000 und 5000 Pa aufweist.

9. Solarkollektor nach einem der vorstehenden Ansprüche, dadurch gekennzeichnet, daß das Fluid zum Wärmeaustausch für eine Arbeitstemperatur von über 200° Celsius ausgelegt ist.

10. Solarkollektor nach einem der vorstehenden Ansprüche, dadurch gekennzeichnet, daß die Gehäusewanne (2) an mindestens einer ihrer vom einfallenden Sonnenlicht (3) abgewandten Seiten einen Wärmedämmstoff (10) aufweist.

11. Solarkollektor nach Anspruch 10, dadurch gekennzeichnet, daß der Wärmedämmstoff (10) ein mikroporöser Wärmedämmstoff ist, dessen Poren kleiner als die mittlere freie Weglänge der Luftmoleküle unter dem Normal-Betriebsunterdruck des Solarkollektors (1) sind.

12. Solarkollektor nach einem der Ansprüche 10 oder 11, dadurch gekennzeichnet, daß ein Temperaturfühler (21) vorgesehen ist, mit dem die Temperatur des Absorbers (12) erfaßbar ist und der mit einem Eingang einer elektronische Regelschaltung (23) verbunden ist, die mit einem Ausgang an eine den Unterdruck in dem Solarkollektor (1) erzeugende Vakuumpumpe (24) angeschlossen ist.

**Claims**

1. A solar collector for generating high temperatures comprising a housing trough (2), a glass plate (4) which seals off the solar collector (1), a selective absorber (12) and a transparent insulating structure (13) which is sealingly fixed to the inside of the glass plate (4), an air gap (15) being present between the transparent insulating structure (13) and the selective absorber (12), characterised in that the solar collector (1) has a pressure of below 10,000 Pa in its cavity (6) and that the transparent insulating structure (13) is of a radiation length which is less than 5 centimetres.

2. A solar collector according to claim 1 characterised in that the air gap (15) is of a width which corresponds to the radiation length of the transparent insulating structure (13) multiplied by the reciprocal value, reduced by the number ½, of the degree of emission of the selective absorber (12).

3. A solar collector according to one of claims 1 and 2 characterised in that the air gap is between 5 and 20 centimetres in width.

4. A solar collector according to one of the preceding claims characterised in that the insulating structure (13) has honeycombs (14) which are elongated in the longitudinal direction and the length of which is great in relation to their diameter.

5. A solar collector according to claim 4 characterised in that the wall structures of the honeycombs (14) are made up of polygons which are of equal size in terms of their area, in particular squares or hexagons.

6. A solar collector according to claim 4 or claim 5 characterised in that the insulating structure (13) is glued to the glass plate (4) along the end face of the honeycombs (14).

7. A solar collector according to one of the preceding claims characterised in that there are provided support rings (8) which support the glass plate (4) against the external air pressure.

8. A solar collector according to one of the preceding claims characterised in that the reduced pressure in the interior (6) of the solar collector (1) is of a pressure of between 2,000 and 5,000 Pa.

9. A solar collector according to one of the preceding claims characterised in that the fluid for heat exchange is designed for an operating temperature of over 200° Celsius.

10. A solar collector according to one of the preceding claims characterised in that the housing trough (2) has a heat insulating material (10) at at least one of its sides remote from the incident sunlight (3).

11. A solar collector according to claim 10 characterised in that the heat insulating material (10) is a microporous heat insulating material, the pores of which are smaller than the average free length of travel of the air molecules under the normal operational reduced pressure of the solar collector (1).

12. A solar collector according to one of claims 10 and 11 characterised in that there is provided a temperature sensor (21) with which the temperature of the absorber (12) can be detected and which is connected to an input of an electronic regulating circuit (23) which is connected by an output to a vacuum pump (24) for producing the reduced pressure in the solar collector (1).

**Revendications**

1. Collecteur solaire pour produire des températures élevées, comprenant un boîtier (2), une plaque de verre (4) étanchant le collecteur solaire (1), un absorbeur sélectif (12) et une structure calorifuge transparente (13) fixée de façon étanche sur la face interne de la plaque de verre (4), la structure calorifuge transparente (13) et l'absorbeur sélectif (12) étant séparés par un espace libre (15), caractérisé en ce que le collecteur solaire (1) présente une pression inférieure à 10 000 Pa dans son espace vide (6) et en ce que la structure calorifuge transparente (13) présente une longueur de rayonnement inférieure à 5 centimètres.

2. Collecteur solaire selon la revendication 1, caractérisé en ce que l'espace libre (15) présente une largeur qui correspond à la longueur de rayonnement de la structure calorifuge transparente (13), multipliée par la valeur inverse diminuée de 1/2 du taux d'émission de l'absorbeur sélectif (12).

3. Collecteur solaire selon la revendication 1 ou 2, caractérisé en ce que l'espace libre présente une largeur comprise entre 5 et 20 centimètres.

4. Collecteur solaire selon l'une des revendications précédentes, caractérisé en ce que la structure calorifuge (13) comporte des alvéoles (14) oblongues, dont la longueur est grande par rapport au diamètre.

5. Collecteur solaire selon la revendication 4, caractérisé en ce que les structures de paroi des alvéoles (14) sont constituées de polygones de surface égale, en particulier des carrés ou des hexagones.

6. Collecteur solaire selon la revendication 4 ou 5, caractérisé en ce que la structure calorifuge (13) est collée a la plaque de verre (4) le long de la surface antérieure des alvéoles (14).

7. Collecteur solaire selon l'une des revendications précédentes, caractérisé en ce que des anneaux porteurs (8) sont prévus pour supporter la plaque de verre (4) afin de résister à la pression atmosphérique externe.

8. Collecteur solaire selon l'une des revendications précédentes, caractérisé en ce que l'espace intérieur (6) du collecteur solaire (1) présente une pression comprise entre 2000 et 5000 Pa.

9. Collecteur solaire selon l'une des revendications précédentes, caractérisé en ce que le fluide d'échange thermique est étudié pour une température de service supérieure à 200 ° Celsius.

10. Collecteur solaire selon l'une des revendications précédentes, caractérisé en ce que le boîtier (2) présente un matériau calorifuge (10) sur au moins une de ses faces non exposées à la lumière solaire incidente (3).

11. Collecteur solaire selon la revendication 10, caractérisé en ce que le matériau calorifuge (10) est un matériau calorifuge microporeux, dont les pores sont plus petits que le libre parcours moyen des molécules d'air sous une dépression de service normale dans le collecteur solaire (1).

12. Collecteur solaire selon la revendication 10 ou 11, caractérisé en ce qu'il est prévu une sonde thermique (21) qui mesure la température de l'absorbeur (12) et dont une entrée est reliée à un circuit de régulation électronique (23) et dont une sortie est raccordée à une pompe à vide (24) produisant une dépression dans le collecteur solaire (1).

*Fig. 1*

Fig. 2

Fig. 3

EP 0 351 546 B1

Fig. 4

EP 0 351 546 B1